# EUROPÄISCHE PATENTSCHRIFT

(11) **EP 1 728 741 B1**
(45) Veröffentlichungstag und Bekanntmachung des Hinweises auf die Patenterteilung: **30.09.2009**
(21) Anmeldenummer: 05090196.6
(22) Anmeldetag: 28.06.2005
(51) Int. Cl.: B65G 53/46, F16L 55/26, B08B 9/04, B65G 53/52

(54) **Anlage zum pneumatischen Fördern eines pulver- oder granulatförmigen Produkts durch eine Rohrleltung**
Plant for conveying pneumatically a pulverulent or granular product through a pipeline
Installation de convoyage pneumatique d 'un produit pulvérulent ou granuleux dans un conduit

(30) Priorität: 31.05.2005 EP 05090174
(43) Veröffentlichungstag der Anmeldung: 06.12.2006
(73) Patentinhaber: I.S.T. Industrie Service Technologie Beratungs-und Beteiligungsgesellschaft mbH, 22145 Hamburg (DE)
(72) Erfinder: Brzezinski, Lothar, 23795 Fahrenkrug (DE)
(74) Vertreter: Wenzel & Kalkoff

(56) Entgegenhaltungen:
- DE-A1- 10 339 353
- DE-C- 411 152
- US-A- 4 780 028

## Beschreibung

Die Erfindung betrifft eine Anlage zum pneumatischen Fördern eines pulver- oder granulatförmigen Produkts durch eine Rohrleitung, gemäß dem Oberbegriff des Anspruchs 1. Eine derartige Anlage ist aus der DE 103 39 353 A1 bekannt.

Es ist auch eine Anlage zur taktweisen Förderung von Getreide bekannt, bei der das Produkt mittels Druckluft in einzelne Pfropfen zerlegt und durch die Rohrleitung gefördert wird. Die bekannte Anlage ist jedoch konstruktiv nicht zum Molchen der Rohrleitung geeignet.

Die Aufgabe der vorliegenden Erfindung besteht darin, mit einfachen Mitteln eine molchbare Förderanlage zum pneumatischen Stoßfördem eines pulver- oder granulatförmigen Stoffes durch eine Rohrleitung bereitzustellen.

Die Erfindung löst diese Aufgabe mit den Mitteln von Anspruch 1. In der Befüllposition ist der Rohrleitungsabschnitt mit dem Produkt befüllbar. Durch einfaches Verstellen des Rohrleitungsabschnitts kann die darin enthaltene Produktportion in die Durchlassposition in der Rohrleitung gebracht werden. In der Durchlassposition kann die eingeschleuste Produktportion mittels Druckluft abgefördert werden. Durch einfaches Verstellen kann der Rohrleitungsabschnitt von der Durchlassposition in der Befüllposition zur erneuten Befüllung gebracht werden. Da der Rohrleitungsabschnitt in der Durchlassposition eine durchgehende molchbare Rohrleitung mit der Rohrleitung bildet, kann diese bei Bedarf gemolcht werden.

Die stoß- bzw. taktweise Propfenförderung ist schonender für das Produkt als die bekannte Förderung der Partikel im Luftstrom und reduziert den Abrieb in der Rohrleitung insbesondere in gekrümmten Abschnitten. Zudem ist der mittlere Leistungsbedarf signifikant niedriger. Die Erfindung stellt nun eine Anlage zur stoßweisen Förderung von pulver- oder granulatförmigern Produkt mit einer durchgehend molchbaren Rohrleitung bereit.

Erifndungsgemäß sind eine Mehrzahl von Rohrleitungsabschnitten vorgesehen, die jeweils zwischen der Durchlassposition und der Befüllposition verstellbar sind. Dies ermöglicht es, dass ein Rohrleitungsabschnitt in der Durchlassposition abgefördert wird und zugleich ein weiterer Rohrleitungsabschnitt in der Befüllposition befüllt wird. Hierdurch wird eine Steigerung der Taktrate erreicht. Mittels weiterer Rohrleitungsabschnitte lässt sich die Totzeit weiter reduzieren, da ein einzelner Rohrleitungsabschnitt gegebenenfalls einen geringeren Weg zurücklegen muss. Vorzugsweise sind daher mindestens drei, weiter bzw. mindestens vier Rohrleitungsabschnitte vorgesehen. Die Rohrleitungsabschnitte sind vorzugsweise in einem einheitlichen Träger montiert, der mittels eines Antriebs einheitlich verstellbar ist. Insbesondere handelt es sich um einen im wesentlichen einteiligen bzw. in sich starren Träger.

Besonders einfach ist eine Schleuseneinrichtung mit einem dreh- bzw. schwenkbaren Rohrleitungsabschnitt. Bei einer Mehrzahl von Rohrleitungsabschnitten kann dies in einer bevorzugten Ausfiihrungsform mittels eines drehbaren Trägers in der Art einer Revolvertrommel geschehen.

Wenn die Verteilervorrichtung vorzugsweise Verschlussmittel aufweist, welche die Rohrleitung beim Verstellen des Rohrleitungsabschnitts bzw. des Trägers jederzeit geschlossen halten, wird eine offene Rohrleitung insbesondere beim Verstellvorgang vermieden. Die Förderanlage ist dann jederzeit vollständig geschlossen, um ein ungewolltes Austreten von Produkt aus der Förderanlage oder eine Kontamination des Produkt durch eintretende Fremdstoffe zu verhindern.

Weitere vorteilhafte Merkmale gehen aus den Unteransprüchen und der folgenden Beschreibung vorteilhafter Ausführungsbeispiele unter Bezugnahme auf die beigefügten Zeichnungen hervor. Es zeigen:
- Fig. 1:: eine Seitenansicht einer molchbaren Förderanlage nach einer Ausführungsform der Erfindung;
- Fig. 2:: eine Ansicht in Förderrichtung auf die Schleuseneinrichtung gemäß Fig. 1;
- Fig. 3:: eine Seitenansicht der molchbaren Rohrleitung im Bereich der Schleuseneinrichtung; und
- Fig. 4:: eine Seitenansicht einer molchbaren Förderanlage nach einer Ausführungsform, die kein Teil vorliegenden Erfindung ist.

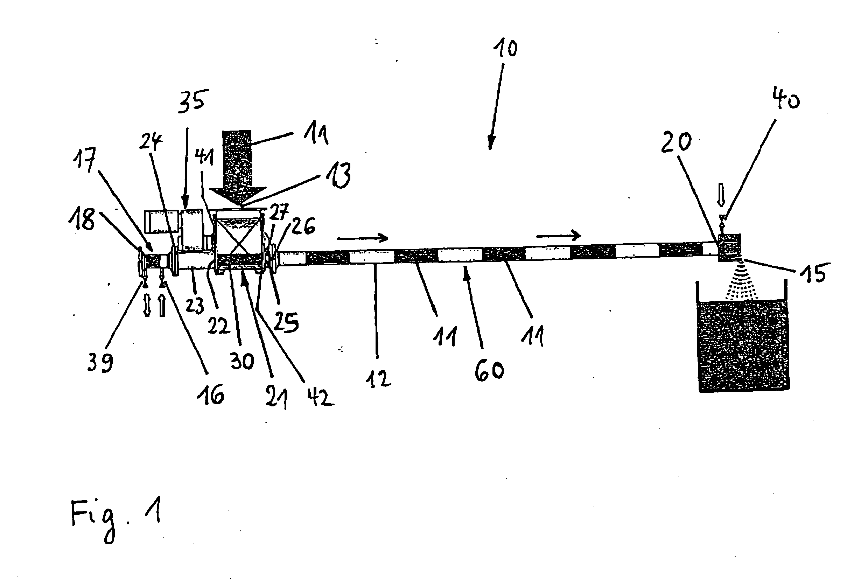

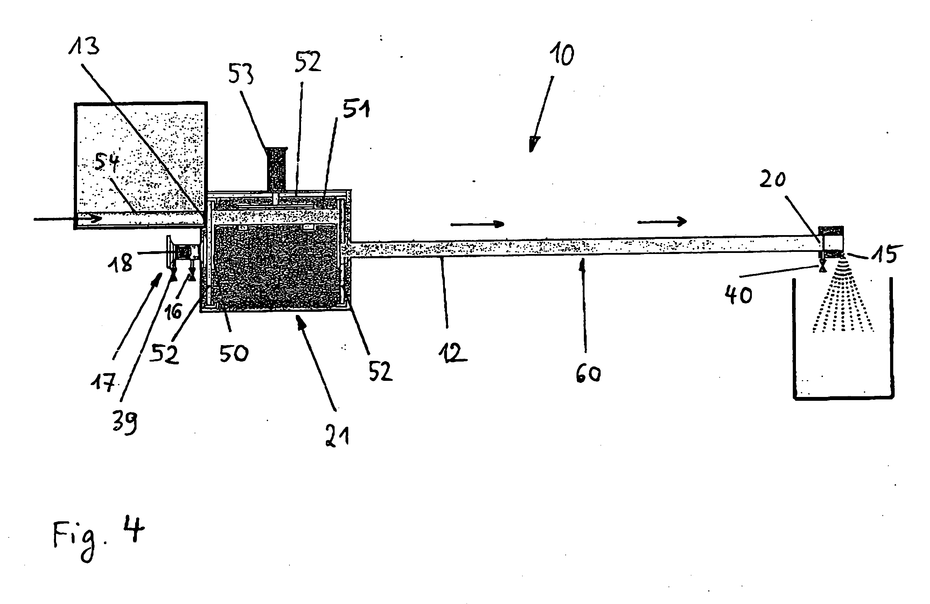

Die Förderanlage 10 dient zur Förderung von Produktportionen 11 von einem Produkteinlass 13 zu einem Produktauslass 15 mittels einer Förderleitung 12. Die Förderrichtung ist in den Fig. 1 und 4 durch Pfeile wiedergegeben. An dem eingangsseitigen Ende der Förderleitung 12 ist eine Molchstation 17 vorgesehen, in der der Rohrleitungsmolch 18 im Förderbetrieb der Förderanlage 10 geparkt ist. Die die Förderleitung 12 umfassende, sich von der Molchkammer 17 bis zum ausgangsseitigen Ende 20 der Förderleitung 12 erstreckende Rohrleitung 60 ist vollständig mittels des Molchs 18 molchbar. Zu diesem Zweck weist die weist die Rohrleitung 60 zwischen der Molchstation 17 und dem ausgangsseitigen Ende 20 einen im wesentlichen konstanten, mit dem Außendurchmesser des Molchs 18 korrespondierenden Innendurchmesser auf.

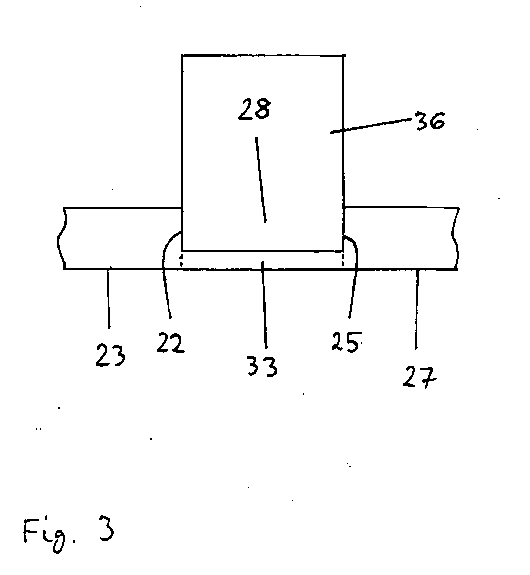

Zur Förderung des Produkt 11 ist an der Eingangsseite der Rohrleitung 60 ein Druckluftanschluss 16 vorgesehen, der mit einer nicht gezeigten Druckluftquelle verbunden ist, Die Mündung des Druckluftanschlusses 16 ist in Förderrichtung zweckmäßigerweise vor dem Produkteinlass 13 und zweckmäßigerweise nach der Ruheposition des Molchs 18 angeordnet. Die Druckluftanlage ist zur stoßweisen Beaufschlagung des Anschlusses 16 mit Druckluft eingerichtet, beispielsweise mittels eines steuerbaren Ventils. Zum Einschleusen des Produkt in die Rohrleitung 60 ist eine Schleuseneinrichtung 21 in die Rohrleitung 60 eingebaut. Die Schleuseneinrichtung 21 weist im wesentlichen drei Öffnungen auf, nämlich eine erste Öffnung 22, die mit der Molchkammer 17 verbunden ist, beispielsweise über einen Rohrleitungsabschnitt 23 und einen Anschluss 24, eine zweite Öffnung 25, die mit der Förderleitung 12 beispielsweise über einen Rohrleitungsabschnitt 27 und einen Anschluss 26 verbunden ist, und eine dritte Öffnung 28 für den Produkteinlass in die Rohrleitung 60. Zwischen der ersten Öffnung 22 und der zweiten Öffnung 25 ist ein molchbarer Rohrleitungsabschnitt 30 gebildet, wenn sich die Schleuseneinrichtung 21 in einer Durchlassposition befindet. Die dritte Öffnung 28 ist in der Umfangswand de Rohrleitung 60 gebildet, wie aus Fig. 3 ersichtlich ist. Die Produkteinlassrichtung durch die Öffnung 28 ist daher quer zu der Längsachse der Rohrleitung 60 orientiert. Quer zu der Rohrleitung bedeutet nicht notwendigerweise unter 90°, sondern lediglich mit einer Querkomponente.

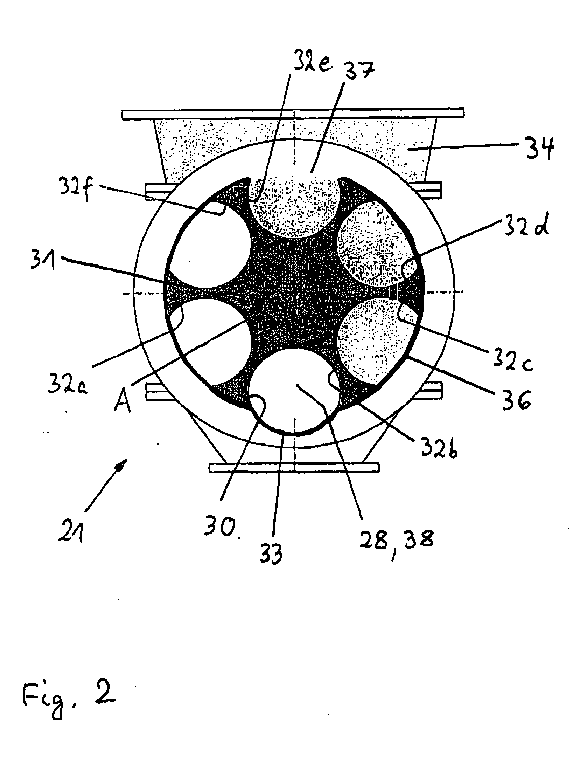

Die Schleuseneinrichtung 21 umfasst eine drehbar gelagerte Trommel 31, die eine Mehrzahl von zweckmäßigerweise gleichgeformten Rohrleitungsabschnitten 32, beispielsweise sechs Rohrleitungsabschnitte 32a bis 32f aufweist. Die Drehachse der Trommel 31 ist parallel zu der Rohrleitung 60 orientiert. Die Rohrleitungsabschnitte 32 sind ebenfalls parallel zu der Rohrleitung 60 orientiert bzw. geschaltet. Die Trommel 31 ist daher in der Art einer Revolvertrommel ausgeführt. Die Rohrleitungsabschnitte 32 in der Trommel 31 sind, wie in Fig. 2 zu erkennen, im Querschnitt unvollständig ausgebildet, da ein Segment in der Umfangswand, vorzugsweise mit einem Öffnungswinkel im Bereich von 105° bis 165°, ausgenommen ist. Die Rohrleitungsabschnitte 32 in der Trommel 31 sind daher wannenförmig ausgebildet, wobei die Öffnung jeder Wanne zum Erleichtern des Befüllens zweckmäßigerweise radial nach außen weist. Jeder Rohrleitungsabschnitt 32a, ... 32f erstreckt sich in Umfangsrichtung vorzugsweise über mindestens 180° (in der Fig. 2 beispielsweise etwa über 225°), um eine ausreichende Menge Produkt aufnehmen zu können. In der Schleuseneinrichtung 21 ist ein Rohrleitungsergänzungsabschnitt 33 fest angebracht, der einen in der Durchlassposition angeordneten Rohrleitungsabschnitt, hier 32b, zu einem in Umfangsrichtung vollständigen, molchbaren Rohrleitungsabschnitt 30 ergänzt.

In Fig. 2 befindet sich der Rohrleitungsabschnitt 32e in der Befüllposition. In einem Reservoir 34 befindliches Produkt kann durch die Produkteintrittsöffnung 37 der Schleuseneinrichtung 21 in die nach oben geöffnete Wanne des Rohrleitungsabschnitts 32e fallen. Durch Rotation der Trommel 31 mittels eines Drehantriebs 35 wird nun die Öffnung der Wanne 32e durch eine die Trommel 31 im wesentlichen einhüllende Umfangswand 36 der Schleuseneinrichtung 21 verschlossen. Im wesentlichen einhüllend bedeutet bis auf die Produkteintrittsöffnung 37 und die Produktaustrittsöffnung 38 der Schleuseneinrichtung 21, In Fig. 2 befinden sich beispielsweise die Rohrleitungsabschnitte 32a, 32c, 32d und 32f in einer solchen Position zwischen der Befüll- und der Durchlassposition. An den Stirnseiten sind diese Rohrleitungsabschnitte mittels entsprechender Stirnwandteile 41, 42 der Schleuseneinrichtung 21 verschlossen.

Durch weitere Rotation der Trommel 31 kann jeder Rohrleitungsabschnitt 32a, ..., 32f sukzessive in die Durchlassposition gebracht werden. In Fig. 2 befindet sich der Rohrleitungsabschnitt 32b in der Durchlassposition. In dieser Position bildet der Rohrleitungsabschnitt 32b mit dem Rohrleitungsergänzungsabschnitt 33 und den Rohrleitungsabschnitten 27, 12 eine durchgehende Förderleitung. Durch Betätigung der Druckluftzufuhr durch den Anschluss 16 wird die in dem Rohrleitungsabschnitt 30 befindliche Produktportion in die Rohrleitung 27, 12 in Richtung zu dem Produktauslass 15 weitergefördert. Zwischen zwei Produktportionen befindet sich jeweils ein Abschnitt mit verminderter Produktdichte, dessen Länge je nach den Umständen variieren kann,

Anschließend wird die Trommel 31 weiter rotiert, bis sich der nächste Rohrleitungsabschnitt 32 in der Durchlassposition befindet. Wenn sich ein Rohrleitungsabschnitt 32 in der Durchlassposition befindet, befindet sich gleichzeitig ein anderer Rohrleitungsabschnitt 32 in der Befüllposition. Auf diese Weise kann ein gleichzeitiges Abfördern und Befüllen erreicht werden, wodurch die Taktgeschwindigkeit und damit die Effizienz der Förderanlage 10 signifikant gesteigert werden kann. Durch Rotation der Trommel 31 wird somit eine getaktete bzw. stoßweise Förderung von Produktportionen durch die Förderleitung 27, 12 erreicht.

Das Molchen der Rohrleitung 60 erfolgt nach Beendigung der Produktförderung oder bei Bedarf, beispielsweise wenn sich die größtmögliche Produktmenge in der Rohrleitung befindet, so dass eine weitere Befüllung zu einer Klumpenbildung bzw. Verstopfung führen könnte. Dabei wird ein vor der Ruheposition des Molchs 18 mündender Druckluftanschluss 39 mit Druckluft beaufschlagt, um den Molch durch die Rohrleitung 60 bis zu dem auslassseitigen Ende 20 zu treiben, wodurch die Rohrleitung 60 von Produktresten gereinigt wird, Durch Beaufschlagung eines endseitigen Druckluftanschlusses 40 kann der Molch 18 durch die Rohrleitung zurück in die Parkposition gedrückt werden.

Wie aus den Fig. 2 und 4 ersichtlich ist ein in der Befüllposition angeordneter Rohrleitungsabschnitt vorzugsweise vollständig außerhalb der Rohrleitung 60 angeordnet und zweckmäßigerweise zu dieser beabstandet. Dies ermöglicht es, die Rohrleitung 60 während der Befüllung des einen Rohrleitungsabschnitts durch den Rohrleitungsabschnitt 30 zu verschließen und eine durchgehende Förder- bzw. Molchleitung zu erreichen. Zweckmäßigerweise ist daher die Drehachse A der Trommel 31 bzw, allgemeiner des Trägers außerhalb der Rohrleitung 60 angeordnet.

In den Zwischenpositionen der Trommel 31, in der sich die Rohrleitungsabschnitte 32a, ... 32f zwischen den definierten Positionen einschließlich der Befüllposition und der Durchlassposition befinden, ist die Rohrleitung 60 vollständig verschlossen, um ein Herauslecken von Produkt bzw. eine Kontamination von Produkt durch eintretende Verunreinigungen zu verhindern. Dies geschieht in der Ausführungsform gemäß Fig. 2 beispielsweise mit Hilfe der Wandteile 36, 41, 42 der Schleuseneinrichtung 21. In einer anderen Ausführungsform, bei der die Abstände zwischen benachbarten Rohrleitungsabschnitten 32 größer sind, beispielsweise bei lediglich vier Rohrleitungsabschnitten 32a, ... 32d in Fig. 2, würde dies durch entsprechende Mantelflächen der Trommel 31 erreicht. Im Beispiel der Fig. 4 verschließen entsprechende Oberflächen des Trägers 50 die Molchkammer 17 und die Förderleitung 12.

Die Ausführungsform gemäß Fig. 4 ist kein Teil der vorliegenden Erfindung. In dieser Ausführungsform ist ein Rohrleitungsabschnitt 51 in einem verschiebbaren Träger 50 montiert, der mittels Führungselementen in einem festen Rahmen 52 durch Betätigung einer Betätigungseinrichtung 53, beispielsweise eines pneumatischen Kolbenzylinders, senkrecht zur Rohrleitungsachse verschiebbar ist. In der in Fig. 4 gezeigten Befüllposition wird Produkt durch ein Zuführrohr 54 in den Rohrleitungsabschnitt 51 geschoben. Anschließend wird der Rohrleitungsabschnitt 51 durch Betätigung des Kolbenzylinders 53 in die Durchlassposition verschoben, in der die Rohrleitungsabschnitte 51,12 eine durchgehende und molchbare Rohrleitung 60 bilden. Zum erneuten Befüllen wird dann der Rohrleitungsabschnitt 51 durch Betätigung des Kolbenzylinders 53 in die in Fig. 4 obenliegende Befüllposition verschoben.

## Patentansprüche

1. Anlage zum pneumatischen Fördern eines pulver- oder granulatförmigen Produkts durch eine Rohrleitung (60), wobei die Anlage eine molchbare Rohrleitung (60), eine Schleuseneinrichtung (21) zum Einschleusen des Produkts in die Rohrleitung (60) sowie eine Molchkammer (17) mit einem Molch (18) aufweist,
**dadurch gekennzeichnet, dass** die Anlage zur stoßweisen Förderung von Produktportionen (11) eingerichtet ist, und dass die Schleuseneinrichtung (21) eine Mehrzahl von Rohrleitungsabschnitten (32a, 32b,..., 32f) aufweist, die jeweils zwischen einer Durchlassposition, in der die Rohrleitungsabschnitte (32a, 32b,...32f) einen Teil der durchgehend molchbaren Rohrleitung (60) bilden, und einer Befüllposition zum Befüllen der Rohrleitungsabschnitte (32a, 32b,...32f) mit dem Produkt verstellbar sind, wobei jeder Rohrleitungsabschnitt (32a, 32b,...32f) wannenförmig ist und in der Rohrleitung (60) ein den wannenförmigen Rohrleitungsabschnitt (32a, 32b,...,32f) ergänzendes Rohrwandteil (33) angeordnet ist.

2. Anlage nach Anspruch 1, **dadurch gekennzeichnet, dass** die Rohrleitungsabschnitte (32a, 32b,...32f) zwischen der Durchlassposition und der Befüllposition dreh- bzw. schwenkbar ist.

3. Anlage nach Anspruch 2, **dadurch gekennzeichnet, dass** die Dreh- bzw. Schwenkachse im wesentlichen parallel zu der Rohrleitung (60) orientiert ist.

4. Anlage nach einem der Ansprüche 1 bis 3, **dadurch gekennzeichnet, dass** die Rohrleitungsabschnitte (32a, ..., 32f) in einem verstellbaren Träger (31; 50) montiert sind.

5. Anlage nach Anspruch 4, **dadurch gekennzeichnet, dass** der Träger (31) eine drehbar gelagerte Trommel ist.

6. Anlage nach einem der Ansprüche 1 bis 5, **dadurch gekennzeichnet, dass** Verschlussmittel vorgesehen sind, um die Rohrleitung (60) beim Verstellen des Rohrleitungsabschnitte (32a, 32b,...32f) jederzeit geschlossen zu halten.

## Claims

1. Installation for pneumatically conveying a powdery or granular product through a pipeline (60), wherein the installation comprises a piggable pipeline (60), a lock device (21) for introducing the product into the pipeline (60) and a pig chamber (17) comprising a pig (18), **characterized in that** the installation is equipped for conveying product portions (11) in batches and that the lock device (21) comprises a plurality of pipeline sections (32a, 32b, ..., 32f), each of which being adjustable between a passing position in which the pipeline sections (32a, 32b, ..., 32f) form a part of the continuously piggable pipeline (60) and a filling position for filling the pipeline sections (32a, 32b, ..., 32f) with the product, wherein each pipeline section (32a, 32b, ..., 32f) is trough-shaped and a pipe wall part (33) complementing the trough-shaped pipeline section (32a, 32b, ..., 32f) is arranged in the pipeline (60).

2. Installation according to claim 1, **characterized in that** the pipeline sections (32a, 32b, ..., 32f) are rotatable or pivotable between the passing position and the filling position.

3. Installation according to claim 2, **characterized in that** the rotation or swivel axis is oriented substantially parallel to the pipeline (60).

4. Installation according to any one of claims 1 to 3, **characterized in that** the pipeline sections (32a, 32b, ..., 32f) are mounted in an adjustable support (31; 50).

5. Installation according to claim 4, **characterized in that** the support (31) is a rotatably mounted drum.

6. Installation according to any one of claims 1 to 5, **characterized in that** sealing means are provided in order to keep the pipeline (60) sealed at all times when adjusting the pipeline sections (32a, 32b, ..., 32f).

## Revendications

1. Installation pour l'acheminement pneumatique d'un produit en poudre ou en granulés à travers un conduit (60), la ligne présentant un conduit raclable (60), un dispositif (21) d'éclusage pour écluser le produit dans le conduit (60) ainsi qu'une chambre (17) d'écouvillonnage avec un écouvillon (18), **caractérisée en ce que** la ligne est conçue pour acheminer des portions (11) de produit par paquets et **en ce que** le dispositif (21) d'éclusage présente une pluralité de segments (32a, 32b, ..., 32f) de conduit respectivement réglables entre une position de passage, dans laquelle les segments (32a, 32b, ..., 32f) de conduit forment une partie du conduit raclable (60) de bout en bout, et une position de remplissage pour remplir les segments (32a, 32b, ..., 32f) de conduit avec le produit, chaque segment (32a, 32b, ..., 32f) de conduit ayant la forme d'une cuve et un tronçon (33) de plaque tubulaire complétant le segment (32a, 32b, ..., 32f) de conduit en forme de cuve étant disposé dans le conduit (60).

2. Installation selon la revendication 1, **caractérisée en ce que** les segments (32a, 32b, ..., 32f) de conduit peuvent être tournés ou pivotés entre la position de passage et la position de remplissage.

3. Installation selon la revendication 2, **caractérisée en ce que** l'axe de rotation ou de pivotement est orienté de manière essentiellement parallèle au conduit (60).

4. Installation selon l'une des revendications 1 à 3, **caractérisée en ce que** les segments (32a, ..., 32f) de conduit sont montés dans un support réglable (31 ; 50).

5. Installation selon la revendication 4, **caractérisée en ce que** le support (31) est un tambour pivotant.

6. Installation selon l'une des revendications 1 à 5, **caractérisée en ce que** des moyens de fermeture sont prévus pour maintenir le conduit (60) à tout moment fermé lors du réglage des segments (32a, 32b, ..., 32f).
